# FASCICULE DE BREVET EUROPEEN

(11) **EP 3 643 812 B1**
(45) Date de publication et mention de la délivrance du brevet: **03.03.2021**
(21) Numéro de dépôt: 19203928.7
(22) Date de dépôt: 17.10.2019
(51) Int. Cl.: C23F 1/26, F01D 25/00, C23G 1/10

(54) **PROCÉDÉ CHIMIQUE DE MATIFICATION**
CHEMISCHES MATTIERUNGSVERFAHREN
CHEMICAL MATTING METHOD

(30) Priorité: 26.10.2018 FR 1859935
(43) Date de publication de la demande: 29.04.2020
(73) Titulaire: SAFRAN AIRCRAFT ENGINES, 75015 Paris (FR)
(72) Inventeur: SAGET, Pierre-Joseph, Xavier, Hervé, 77550 MOISSY-CRAMAYEL (FR)
(74) Mandataire: Gevers & Orès

(56) Documents cités:
- EP-A1- 1 947 217
- EP-A2- 1 498 731
- FR-A1- 2 961 598
- US-A- 4 551 434

## Description

### Domaine de l'invention

La présente invention concerne le domaine général des mesures de cartographie de pièces de turbomachine, en particulier les méthodes de mesures sans contact dites MSC, notamment la préparation des pièces en amont de ces mesures.

### Etat de la technique

Dans le cadre du programme de fabrication des turbomachines, notamment des turbomachines d'aéronefs, certaines pièces entrant dans la composition desdits turbomachines sont cartographiées au moyen d'une mesure sans contact, dite « MSC ». Cette mesure est, par exemple, une mesure dite « optique », comme par exemple illustré dans le document FR 2 961 598 A1. Selon les procédés, les mesures peuvent intervenir à des stades de fabrication différents, dans certains cas alors que les pièces ne sont pas finies. Or les pièces non finies peuvent alors être trop brillantes et la machine destinée à mettre en œuvre le procédé MSC ne peut pas acquérir les données nécessaires à la cartographie, notamment à cause de diverses réverbérations et/ou réflexions. Afin de pouvoir mener ces cartographies au stade de fabrication de la turbomachine désiré, les pièces sont matifiées par des opérateurs.

Classiquement et de manière connue en soi, cette matification se fait à la main dans une boue de tonnelage.

Le tonnelage (aussi appelé polissage mécano-chimique, tribofinition ou encore trovalisation) est un procédé bien connu qui permet de modifier l'état de surface et les arêtes d'une pièce, notamment en métal. La pièce est immergée dans un mélange abrasif mis en mouvement vibratoire, oscillatoire, et/ou rotatif dans une cuve. Le résultat observé sur la pièce est dû aux frottements entre la pièce et le mélange abrasif. Ce résultat dépend du type d'équipement utilisé, de la composition du mélange abrasif, des paramètres de vitesse et de la durée de l'opération.

Dans le cas présent, la matification des pièces de turbomachine à cartographier se fait au moyen de cette boue de tonnelage. Cette boue est récupérée puis déposée au pinceau sur la pièce à cartographier avant la mesure, puis enlevée après la mesure MSC à l'aide d'un chiffon et d'un rinçage éventuel.

Ce procédé peut impacter la précision de la mesure du fait d'un aspect matifié non homogène de la pièce cartographiée et de la potentielle présence de résidus. De plus, il nécessite de nombreuses manipulations répétitives et pénibles et pose ainsi des problèmes d'ergonomie, de sécurité, santé et d'environnement (SSE), tels que des traumatismes musculo-squelettiques. De par ces manipulations, ce procédé induit une perte de temps et est couteuse.

### Objectif de l'invention

L'objectif de la présente invention est de traiter les pièces à cartographier de manière à obtenir une matification homogène, sans résidus potentiels, qui soit plus sécurisante et moins coûteuse que les méthodes de l'état de la technique, et qui puisse en outre, être réalisée de manière industrielle.

### Exposé de l'invention

On parvient à cet objectif conformément à l'invention grâce à un procédé de matification d'une pièce de turbomachine comprenant un matériau métallique, le procédé comprenant une étape d'immersion de ladite pièce dans un bain chimique de matification de ladite pièce métallique, le bain comprenant au moins du fluorure de sodium (NaF) et de l'acide fluorhydrique (HF), caractérisé en ce que l'étape d'immersion dure entre 2 à 15 minutes.

Ainsi, cette solution par matification chimique permet d'atteindre l'objectif susmentionné. La matification est en effet obtenue de manière homogène par immersion ou le trempage dans un bain et le nombre de manipulations étant réduit, la sécurité et la fiabilité sont augmentées.

Le procédé comprend également l'une ou plusieurs des caractéristiques suivantes, prises seules ou en combinaison :
- l'étape d'immersion est paramétrée de manière à créer une dissolution homogène du matériau métallique sur une épaisseur de l'ordre de 3 à 10 µm, et en ce que la pièce est enrichie avec une quantité minimum en dihydrogène (H2),
- le matériau métallique de la pièce comporte du titane (Ti), un alliage de titane et/ou des oxydes de titane (TiO₂),
- l'épaisseur de matériau dissout est de 5 µm,
- l'enrichissement en dihydrogène (H₂) de la pièce est de l'ordre de 15ppm,
- la pièce est obtenue par un processus de forge et présente, en surface, une couche d'oxydes de titane (TiO₂) et d'alpha case, la dissolution homogène permettant de retirer la couche d'oxydes de titane (TiO₂) et d'alpha case,
- la dissolution homogène se déroule successivement et/ou parallèlement selon deux réactions chimiques suivantes :

   (1) NaF + H₂SO₄ = FH + NaHSO₄

   (2) TiO₂ + 6HF → TiF₆H₂ + H₂O,
- le procédé de comporte une étape d'installation d'au moins une pièce à matifier dans un outillage préalablement à l'étape d'immersion dans le bain chimique,
- la température du bain chimique pendant l'étape d'immersion est comprise entre 15 et 30°C,
- le procédé comprend les étapes suivantes
   - une étape de préparation de surface de l'au moins une pièce et
   - une étape de rinçage de la pièce,
- l'étape de préparation de surface de la pièce est réalisée avant l'étape d'immersion et comprend :
   - une étape de dégraissage de la pièce pendant 10min à une température comprise entre 45 et 55°C, pendant laquelle l'outillage est plongé dans un bain alcalin,
   - une première étape de rinçage mort de 60s à température ambiante, pendant laquelle l'outillage est plongé dans un bain d'eau,
   - une première étape de rinçage courant de 120s à température ambiante, pendant laquelle l'outillage est plongé dans un bain d'eau courante ou aspergé d'eau,
   - une étape de rinçage puis séchage des pièces issu de ce même outillage.

### Brève description des figures

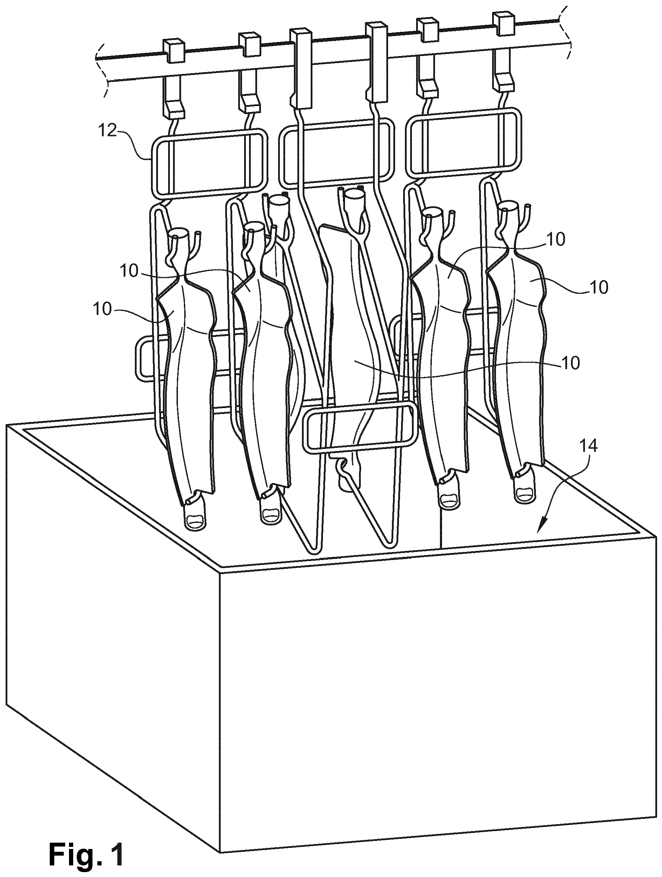

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence au dessin schématique annexé dans lequel a figure 1 représente une série de pièces de turbomachine à cartographier alignées sur un outillage, prêt à être plongées dans un bain selon l'invention suivant le procédé de matification selon l'invention.

### Description de modes de réalisation de l'invention

Les conditions de fonctionnement des turbomachines, conduisent à l'emploi de nombreuses pièces 10 métalliques. En particulier, certaines de ces pièces 10 métalliques sont en titane (Ti) ou en alliages comportant du titane (Ti). Il est important qu'au cours de la fabrication de la turbomachine, que ces pièces 10 subissent un contrôle non destructif destiné à mettre évidence d'éventuels défauts de fabrication. Ces pièces 10 sont classiquement obtenues par des procédés de forge et sont, suite à leur ajustage, très brillantes.

Ces pièces 10 présentent, en outre, une couche d'oxydes (TiO₂) et d'alpha-case à leurs surfaces. Cette couche est classiquement issue de tout procédé de forge de pièces 10 comportant du titane (Ti). En métallurgie, l'appellation « alpha-case » (ou cémentation alpha) désigne une phase surfacique enrichie en oxygène apparaissant lorsque du titane (Ti) ou ses alliages sont exposés à de l'air ou de l'oxygène fortement chauffé. Cette phase est dur et cassante, tend à présenter des micro-fissures et amoindrit les propriétés de la pièce métallique.

La présente invention présente donc l'avantage de matifier les pièces 10 à cartographier tout en les débarrassant des différents oxydes et alpha-cases surfaciques.

Sur la figure 1, on voit donc une série de pièces 10 à matifier en vue d'être cartographiées. Dans le cas présent, il s'agit de bords d'attaques destinés à équiper des organes de turbomachine tels que des aubes de compresseur. Ces pièces 10, sont fixées et alignées sur un outillage 12 destiné à être plongé, avec les pièces 10, dans une succession de bains différents.

Lors de l'installation ou mise en place des pièces 10 sur l'outillage 12, il convient de vérifier que les pièces 10 ne se touchent pas entre elles, car ceci pourrait empêcher l'action des différents bains sur l'intégralité de la surface de chacune des pièces 10. A cet effet, l'outillage peut porter jusqu'à six pièces pour laisser un espace suffisant entre chaque pièce. Bien entendu, le nombre de pièces dépendra de la taille de l'outillage et de la taille des récipients ou cuves destinés à contenir les bains. Il convient aussi de vérifier que l'outillage 12 est en état de fonctionnement et qu'il soit propre. Par ailleurs, le gravage du numéro de l'outillage 12 doit être lisible, dans le but d'assurer la bonne traçabilité de la pièce.

L'outillage comporte également une éprouvette de dissolution (non représentée) permettant de déterminer le temps de matification. L'éprouvette utilisée est classiquement une éprouvette métallique. Cette éprouvette métallique est réalisée dans un alliage de titane (Ti) de type TA6V et présente ici une forme rectangulaire.

Une fois que les pièces 10 ont été correctement fixées sur l'outillage 12 et que celui-ci est en bon état de fonctionnement, l'outillage 12 est plongé dans une première cuve comportant un bain alcalin, par exemple un bain à base de soude. Ceci permet de réaliser un dégraissage des pièces 10. Cette étape de dégraissage des pièces 10 dure 10 minutes (avec une précision de ± 5 minutes). La température du bain alcalin est comprise entre 45 et 55°C.

L'outillage 12 avec les pièces 10 est ensuite plongé dans une deuxième cuve, cette deuxième cuve comportant de l'eau. Ceci permet de réaliser une première étape de rinçage, dit rinçage mort, des pièces 10 dégraissées.

De manière classique et bien connue en soi, le rinçage mort, aussi appelé rinçage statique, désigne un pré-rinçage qui sert à retenir une partie de la pollution en provenance d'un bain de traitement, ici le bain alcalin. Le bain de rinçage mort n'est pas alimenté en continu par de l'eau fraîche mais périodiquement renouvelé. Si ce bain part en traitement de déchets spéciaux, ce peut être une façon de réduire la charge de pollution rejetée. Le rinçage mort permet également de diminuer la quantité d'eau de rinçage. Par exemple, un rinçage mort vidangé lorsqu'il a atteint 20% de la concentration du bain de traitement permet de diviser la quantité d'eau de rinçage par 5, soit 80% d'économies d'eau.

Cette première étape de rinçage mort dure environ 60 secondes. Cette étape est réalisée avantageusement à température ambiante.

L'outillage 12 avec les pièces 10 est ensuite plongé dans une troisième cuve comportant, elle aussi, de l'eau. Ceci permet de réaliser une première étape de rinçage dit courant, c'est à dire que la troisième cuve est constamment alimentée en eau fraîche/courante. Ce premier rinçage courant dure environ 120s. Ce rinçage courant se fait avantageusement à température ambiante. Cette étape peut également être réalisée par aspergement de l'outillage 12.

L'outillage 12 et les pièces 10 sont alors plongés dans une quatrième cuve comportant. Cette quatrième cuve comprend, elle, le bain chimique 14 selon l'invention. C'est dans cette quatrième cuve que se déroule l'étape de traitement des pièces métalliques. Cette étape de traitement est l'étape de matification chimique à proprement parler. Pour réaliser cette matification, les pièces sont immergées dans le bain chimique de manière à obtenir une dissolution homogène du matériau métallique. L'immersion des pièces dure entre 2 à 15 minutes (avec une précision de ± 1 minute). Cette étape d'immersion est réalisée à une température comprise entre 15 et 30°C. En particulier, le bain chimique est portée à cette température comprise entre 15 et 30°C.

Le bain 14 de l'étape d'immersion ou de traitement comprend notamment du fluorure de sodium (NaF) à raison de 11 à 15 g par litre de bain 14 et de l'acide sulfurique (H₂SO₄) (de densité 1,83) à raison de 75±5mL par litre de bain 14. Le litre de bain 14 est complété en eau (H₂O). Le fluorure de sodium (NaF) en solution aqueuse libère des ions F⁻ et l'acide sulfurique (H₂SO₄) donne des ions H⁺, permettant de former de l'acide fluorhydrique (HF) dilué. Ainsi le fluorure de sodium (NaF) et l'acide sulfurique (H₂SO₄) régissent l'un avec l'autre selon l'équation :
- NaF + H₂SO₄ = FH + NaHSO₄, et on obtient ainsi de l'acide fluorhydrique (HF).

Lorsque les pièces 10 présentant des oxydes de titane (TiO2) en surface sont plongées dans le bain chimique 14, on observe une réaction de l'acide fluohydrique (HF) avec les oxydes de titane (TiO₂) selon l'équation :
- TiO₂₍ₛ₎ + 6HF₍ₗ₎ → TiFeH₂₍ₛ₎ + H₂O₍ₗ₎

Les ions Ti⁴⁺ n'existant pas en solution, ils sont complexés par les ions F⁻ pour donner, notamment, l'entité solide TiF₆H₂ qui se dissout dans le bain 14. La surface des pièces 10 est débarrassée des oxydes et la surface de chaque pièce 10 est ainsi nettoyée/matifiée de manière homogène.

De par son pouvoir complexant, l'ion F⁻ fait passer le titane (Ti) sous forme Ti³⁺ et on observe un dégagement gazeux d'hydrogène H₂. Ce dégagement d'hydrogène enrichit les surfaces des pièces 10 matifiées en ions H⁺ par adsorbtion en surface puis par pénétration. Dans le cas de la présente invention, on crée une faible dissolution du titane (Ti) sans pour autant enrichir fortement la pièce 10 en H⁺. L'enrichissement en H₂ se limite à environ 15 ppm±5ppm.

L'épaisseur de la couche dissoute est comprise entre 3 et 10µm. Cette épaisseur de couche dissoute n'est, de préférence, pas supérieur à 5µm.

Le temps de traitement des pièces 10 est mis au point sur chaque série de pièces 10 en fonction de leur brillance suite à ajustage, afin de les rendre suffisamment mates sans pour autant consommer plus de 5µm d'épaisseur de dissolution. Plus particulièrement, l'étape d'immersion est paramétrée de manière à créer une dissolution homogène du matériau métallique de la pièce 10 sur une épaisseur de l'ordre de 3 à 10 µm. Ca paramétrage assure également que la pièce 10 est enrichie avec une quantité minimum en dihydrogène (H₂).

Après l'étape de traitement, l'outillage 12 est plongé dans une cinquième cuve. Cette cuve contient de l'eau et permet de réaliser une deuxième étape de rinçage mort d'environ 60s, cette étape ayant lieu à température ambiante.

L'outillage 12 est alors plongé dans une sixième cuve contenant de l'eau mise en mouvement afin de réaliser une deuxième étape de rinçage courant d'environ 120s à température ambiante. Comme la précédente étape de rinçage courant, cette étape-ci peut être réalisée au moyen d'aspergement d'eau.

Finalement, l'outillage 12 et les pièces 10 sont plongés dans une septième cuve contenant de l'eau à une température supérieure ou égale à 70°C et formant bain de rinçage à chaud. Ce rinçage à chaud dure 45s.

Suite à ce dernier rinçage, les pièces 10 sont désolidarisées de l'outillage 14 et sont contrôlées par la méthode MSC qui va bien.

Cette solution permet en outre une bonne précision de mesure car l'aspect matifié est homogène et la pièce et parfaitement propre (exempte de résidus) pour la mesure.

Cette solution est bien entendue applicable à tout type de pièces, pouvant équiper toute sorte de turbomachine.

Le remplacement de l'utilisation de la boue de tonnelage par un bain chimique selon l'invention, de manière à matifier la pièce, présente un intérêt économique important : on compte moins d'accident et un temps d'analyse réduit de beaucoup. On passe en effet d'environ 3h pour six pièces à environ 30 minutes pour six pièces.

## Revendications

1. Procédé de matification d'une pièce (10) de turbomachine comprenant un matériau métallique, le procédé comprenant une étape d'immersion de ladite pièce dans un bain chimique (14) de matification de ladite pièce (10) métallique, le bain (14) comprenant au moins du fluorure de sodium (NaF) et de l'acide fluorhydrique (HF), **caractérisé en ce que** l'étape d'immersion dure entre 2 à 15 minutes.

2. Procédé selon la revendication précédente, caracatérisé en ce que l'étape d'immersion est paramétrée de manière à créer une dissolution homogène du matériau métallique sur une épaisseur de l'ordre de 3 à 10 µm, et en ce que la pièce (10) est enrichie avec une quantité minimum en dihydrogène (H₂).

3. Procédé selon l'une quelconque des revendications précédentes, **caractérisé en ce que** le matériau métallique de la pièce (10) comporte du titane (Ti), un alliage de titane et/ou des oxydes de titane (TiO₂).

4. Procédé de matification selon l'une quelconque des revendications précédentes, **caractérisé en ce que** l'épaisseur de matériau dissout est de 5 µm.

5. Procédé de matification selon l'une quelconque des revendications précédentes, **caractérisé en ce que** l'enrichissement en dihydrogène (H₂) de la pièce (10) est de l'ordre de 15ppm.

6. Procédé de matification selon l'une quelconque des revendications précédentes, **caractérisé en ce que** la pièce (10) présente, en surface, une couche d'oxydes de titane (TiO₂) et d'alpha case, la dissolution homogène permettant de retirer la couche d'oxydes de titane (TiO₂) et d'alpha case.

7. Procédé de matification selon la revendication précédentes, **caractérisé en ce que** la dissolution homogène se déroule successivement et/ou parallèlement selon deux réactions chimiques suivantes :
(3) NaF + H₂SO₄ = FH + NaHSO₄
(4) TiO₂ + 6HF → TiF₆H₂ + H₂O.

8. Procédé de matification selon l'une quelconque des revendications précédentes, **caractérisé en ce qu'**il comporte une étape d'installation d'au moins une pièce (10) à matifier dans un outillage (12) préalablement à l'étape d'immersion dans le bain chimique.

9. Procédé de matification selon la revendication précédente, **caractérisé en ce que** la température du bain chimique pendant l'étape d'immersion est comprise entre 15 et 30°C.

10. Procédé de matification selon la revendication précédente, **caractérisé en ce qu'**il comprend les étapes suivantes
- une étape de préparation de surface de l'au moins une pièce (10) et
- une étape de rinçage de la pièce (10).

11. Procédé de matification selon la revendication précédente, **caractérisé en ce que** l'étape de préparation de surface de l'au moins une pièce 10 est réalisée avant l'étape d'immersion et comprend :
- une étape de dégraissage de la pièce pendant 10min à une température comprise entre 45 et 55°C, pendant laquelle l'outillage est plongé dans un bain alcalin,
- une première étape de rinçage mort de 60s à température ambiante, pendant laquelle l'outillage est plongé dans un bain d'eau,
- une première étape de rinçage courant de 120s à température ambiante, pendant laquelle l'outillage est plongé dans un bain d'eau courante ou aspergé d'eau.

12. Procédé de matification selon l'une quelconque des revendications 8 ou 9, **caractérisé en ce que** l'étape de rinçage est réalisée après l'étape d'immersion et comprend:
- une deuxième étape de rinçage mort de 60s à température ambiante, pendant laquelle l'outillage (12) est plongé dans un bain d'eau,
- une deuxième étape de rinçage courant de 120s à température ambiante, pendant laquelle l'outillage (12) est plongé dans un bain d'eau courante ou aspergé d'eau,
- une étape finale de rinçage chaud de 45s à une température supérieure ou égale à 70°C, pendant laquelle l'outillage (12) est plongé dans un bain d'eau courante ou aspergé d'eau.

## Patentansprüche

1. Verfahren zum Mattieren eines Werkstücks (10) einer Turbomaschine, das ein metallisches Material umfasst, wobei das Verfahren einen Schritt des Eintauchens des Werkstücks in ein chemisches Bad (14) zum Mattieren des metallischen Werkstücks (10) umfasst, wobei das Bad (14) mindestens Natriumfluorid (NaF) und Fluorwasserstoffsäure (HF) umfasst, **dadurch gekennzeichnet, dass** der Schritt des Eintauchens zwischen 2 und 15 Minuten dauert.

2. Verfahren nach dem vorstehenden Anspruch, **dadurch gekennzeichnet, dass** der Schritt des Eintauchens so parametrisiert ist, dass eine homogene Auflösung des metallischen Materials über eine Dicke in der Größenordnung von 3 bis 10 µm erzeugt wird, und dass das Werkstück (10) mit einer Mindestmenge an Dihydrogen (H₂) angereichert wird.

3. Verfahren nach einem der vorstehenden Ansprüche, **dadurch gekennzeichnet, dass** das metallische Material des Werkstücks (10) Titan (Ti), eine Titanlegierung und/oder Titanoxide (TiO₂) umfasst.

4. Mattierungsverfahren nach einem der vorstehenden Ansprüche, **dadurch gekennzeichnet, dass** die Dicke des aufgelösten Materials 5 µm beträgt.

5. Mattierungsverfahren nach einem der vorstehenden Ansprüche, **dadurch gekennzeichnet, dass** die Anreicherung mit Dihydrogen (H₂) des Werkstücks (10) in der Größenordnung von 15 ppm liegt.

6. Mattierungsverfahren nach einem der vorstehenden Ansprüche, **dadurch gekennzeichnet, dass** das Werkstück (10) auf der Oberfläche eine Schicht aus Titanoxiden (TiO₂) und Alpha-Case aufweist, wobei die homogene Auflösung das Entfernen der Schicht aus Titanoxiden (TiO₂) und Alpha-Case ermöglicht.

7. Mattierungsverfahren nach dem vorstehenden Anspruch, **dadurch gekennzeichnet, dass** die homogene Auflösung nacheinander und/oder parallel gemäß zwei folgenden chemischen Reaktionen abläuft.:
(3) NaF + H₂SO₄ = FH + NaHSO₄
(4) (TiO₂) + 6HF → TiF₆H₂ + H₂O.

8. Mattierungsverfahren nach einem der vorstehenden Ansprüche, **dadurch gekennzeichnet, dass** es einen Schritt des Einbauens mindestens eines zu mattierenden Werkstücks (10) in ein Werkzeug (12) vor dem Schritt des Eintauchens in das chemische Bad umfasst.

9. Mattierungsverfahren nach dem vorstehenden Anspruch, **dadurch gekennzeichnet, dass** die Temperatur des chemischen Bades während des Schrittes des Eintauchens zwischen 15 und 30 °C beträgt.

10. Mattierungsverfahren nach dem vorstehenden Anspruch, **dadurch gekennzeichnet, dass** es die folgenden Schritte umfasst:
- einen Schritt der Oberflächenvorbereitung des mindestens einen Werkstücks (10) und
- einen Schritt des Spülens des Werkstücks (10).

11. Mattierungsverfahren nach dem vorstehenden Anspruch, **dadurch gekennzeichnet, dass** der Schritt der Oberflächenvorbereitung des mindestens eines Werkstücks (10) vor dem Schritt des Eintauchens durchgeführt wird und Folgendes umfasst:
- einen Schritt des Entfettens des Werkstücks für 10 min bei einer Temperatur zwischen 45 und 55 °C, bei dem das Werkzeug in ein alkalisches Bad getaucht wird,
- einen ersten Totspülschritt von 60 s bei Umgebungstemperatur, bei dem das Werkzeug in ein Wasserbad getaucht wird,
- einen ersten Fließspülschritt von 120 s bei Umgebungstemperatur, bei dem das Werkzeug in ein Bad mit fließendem Wasser getaucht oder mit Wasser besprüht wird.

12. Mattierungsverfahren nach einem der Ansprüche 8 oder 9, **dadurch gekennzeichnet, dass** der Schritt des Spülens nach dem Schritt des Eintauchens durchgeführt wird und Folgendes umfasst:
- einen zweiten Totspülschritt von 60 s bei Umgebungstemperatur, bei dem das Werkzeug (12) in ein Wasserbad getaucht wird,
- einen zweiten Fließspülschritt von 120 s bei Umgebungstemperatur, bei dem das Werkzeug (12) in ein Bad mit fließendem Wasser getaucht oder mit Wasser besprüht wird,
- einen abschließenden Heißspülschritt von 45 s bei einer Temperatur größer oder gleich 70 °C, bei dem das Werkzeug (12) in ein Bad mit fließendem Wasser getaucht oder mit Wasser besprüht wird.

## Claims

1. Method for mattifying a turbine engine part (10) comprising a metal material, the method comprising a step of immersing said part in a chemical bath (14) for mattifying said metal part (10), the bath (14) comprising at least sodium fluoride (NaF) and hydrofluoric (HF) acid, **characterised in that** the immersion step lasts between 2 and 15 minutes.

2. Method according to the preceding claim, **characterised in that** the immersion step is configured so as to create a homogenous dissolution of the metal material over a thickness of around 3 to 10µm, and **in that** the part (10) is enriched with a minimum quantity of dihydrogen (H₂).

3. Method according to any one of the preceding claims, **characterised in that** the metal material of the part (10) comprises titanium (Ti), a titanium alloy and/or titanium oxides (TiO₂).

4. Mattifying method according to any one of the preceding claims, **characterised in that** the dissolved material thickness is 5µm.

5. Mattifying method according to any one of the preceding claims, **characterised in that** the enriching with dihydrogen (H₂) of the part (10) is around 15ppm.

6. Mattifying method according to any one of the preceding claims, **characterised in that** the part (10) has, on the surface, a titanium oxide (TiO₂) and alpha case layer, the homogenous dissolution making is possible to remove the titanium oxide (TiO₂) and alpha case layer.

7. Mattifying method according to the preceding claim, **characterised in that** the homogenous dissolution occurs successively and/or at the same time according to two of the following chemical reactions:
(1) NaF + H₂SO₄ = FH + NaHSO₄
(2) TiO₂ + 6HF → TiF₆H₂ + H₂O.

8. Mattifying method according to any one of the preceding claims, **characterised in that** it comprises a step of installing at least one part (10) to be mattified in a tool (12) prior to the step of immersing in the chemical bath.

9. Mattifying method according to the preceding claim, **characterised in that** the temperature of the chemical bath during the immersion step is of between 15 and 30°C.

10. Mattifying method according to the preceding claim, **characterised in that** it comprises the following steps:
- a step of preparing the surface of the at least one part (10), and
- a step of rinsing the part (10).

11. Mattifying method according to the preceding claim, **characterised in that** the step of preparing the surface of the at least one part (10) is carried out before the immersion step and comprises:
- a step of degreasing the part for 10 minutes at a temperature of between 45 and 55°C, during which the tool is immersed in an alkaline bath,
- a first step of passive rinsing of 60 seconds at ambient temperature, during which the tool is immersed in a water bath,
- a first step of current rinsing of 120 seconds at ambient temperature, during which the tool is immersed in a running water bath or water-sprayed.

12. Mattifying method according to any one of claims 8 or 9, **characterised in that** the rinsing step is carried out after the immersion step and comprises:
- a second passive rinsing step of 60 seconds at ambient temperature, during which the tool (12) is immersed in a water bath,
- a second current rinsing step of 120 seconds at ambient temperature, during which the tool (12) is immersed in a running water bath or water-sprayed,
- a final hot rinsing step of 45 seconds at a temperature greater than or equal to 70°C, during which the tool (12) is immersed in a running water bath or water-sprayed.
